# EUROPEAN PATENT SPECIFICATION

(11) **EP 3 523 634 B1**
(45) Date of publication and mention of the grant of the patent: **15.05.2024**
(21) Application number: 17778267.9
(22) Date of filing: 03.10.2017
(51) Int. Cl.: G01N 21/89, B41J 11/00

(54) **DEFECT DETECTION FOR PRINT MEDIA**
FEHLERERKENNUNG FÜR DRUCKMEDIEN
DÉTECTION DE DÉFAUTS SUR UN SUPPORT D'IMPRESSION

(30) Priority: 06.10.2016 EP 16192512
(43) Date of publication of application: 14.08.2019
(73) Proprietor: Canon Production Printing Holding B.V., 5914 HH Venlo (NL)
(72) Inventor: JANSSEN, Cornelius M.F., 5914 CA Venlo (NL); VAN ACQUOIJ, Catharinus, 5914 CA Venlo (NL)
(74) Representative: Canon Production Printing IP Department
(86) International application number: PCT/EP2017/075028
(87) International publication number: WO 2018/065382

(56) References cited:
- EP-A1- 2 241 938
- EP-A1- 3 007 420
- US-A- 3 588 513
- US-A1- 2005 140 704
- US-A1- 2011 279 507
- US-A1- 2013 300 794

## Description

### FIELD OF THE INVENTION

The present invention generally pertains to a printing system, an apparatus for defect detection in a printing system, and a method for detecting defects in a printing system.

### BACKGROUND ART

One or more deformations present within a sheet of a medium to be printed can cause serious reliability problems in a printing system, such as an inkjet printing system, where there is only a small gap between a sheet transport mechanism and an image forming device or printing head of the printing system. If the sheet to be printed touches the image forming device or the printing head as a result of such a deformation, this can lead to print quality degradation and/or to a sheet jam in the machine. To achieve high print quality in an inkjet printing system, the distance between the printing heads and sheet to be printed should be kept small. Because of this small distance (print gap) the print heads are easily touched by the sheets as they pass. Accordingly, even small defects like dog ears, wrinkles, tears etc. can cause a so-called "head touch", which can degrade print quality, cause nozzle failure, or even sheet jams.

To address these issues, systems have been developed which employ a proofing device capable of identifying sheet deformations and rejecting sheets that contain such deformations. US 8,419,144 B2 discloses such a proofing device, wherein an emitter is positioned alongside a transport path of the printing system, such that the emitter emits an optical beam over the surface of the medium. On a laterally opposite side of the transport path a detector aligned for receiving the optical beam. When a deformation in the medium exceeds a predefined height, the deformation passes into the optical beam, preventing the beam from reaching the detector. The presence of a deformation is thus identified by the detection of the absence of light falling on the detector. A disadvantage of the known proofing device is its unreliability. The sensor and emitter need to be accurately aligned. Any deviations in the alignment of the emitter with respect to the detector cause fluctuations in the received signal. A common cause of such fluctuations is vibrations in or jolts to the printing system during operation, resulting in incorrect determination of the suitability of a medium for printing. The known proofing device is further unreliable for small deformations, as it is designed to identify a deformation when a deformation blocks the optical beam.

EP3007420 A1 discloses a method of optimizing the operating conditions for printing sheets. US2005140704 AA discloses an image forming range varying system of an image forming apparatus, and an image forming range varying method, the system is mounted on the image forming apparatus comprising at least two head rows in which ink heads arranged as predetermined overlap in end portions, in a scanning direction of the ink head with respect to a conveying direction of an image forming medium, and an image of the conveyed image forming medium is detected by an image sensor, both ends shapes of the conveyed image forming medium are detected, and an address of an ink nozzle is set/driven in accordance with the shape of an image to be formed to thereby form the image. US2013300794 AA discloses an inkjet printer for printing on a continuous web of recording media includes a receiver to receive a beam of collimated light transmitted across the surface of a continuous web of recording media supported by a roller. The intensity of the transmitted beam received by the receiver can be used to determine the presence of a defect in the continuous web or in the roller. A controller is configured to reduce the speed of or stop movement of the web through the printer and to retract one or more printheads from a printing location to prevent the defect from damaging the printhead(s). US3588513 A discloses a moving web which is inspected photo-electrically for faults which involve defective parts standing out from its surface by a narrow beam of light close to the surface and directed across the web at right angles to the direction of movement, total or partial reflection of the beam by a defect being detected by a lateral array of photo-cells. The beam which may be a laser beam may cross the web in the vicinity of a roller, and may be chopped to facilitate amplification and two close parallel beams may be directed one from each other.

### SUMMARY OF THE INVENTION

It is an object of the present invention to provide a reliable apparatus and method for detecting deformations in sheets in a printing system.

Thereto, the present invention provides a printing system according to claim 1, an apparatus for defect detection according to claim 11, and a method according to claim 12.

It is an insight of the inventors that the prior art systems are unreliable as these continually look for any changes or variations in the intensity of the signal as detected by the sensor, which changes or variations may also be caused by oscillations or vibrations in the printing system. It is a further insight of the inventors that the reliability may be improved by configuring the apparatus for defect detection in such a manner that in case a medium is suitable for printing no emission signal reaches the sensor assembly, while, in case of a substantial deformation in the medium, a part of the emission signal is received by the sensor assembly.

When the medium is free of deformations, the first emission signal is prevented from reaching the sensor assembly. Substantially no emission signal is then received by the sensor assembly, which allows for a clear and well defined indication of the medium's suitability for printing. However, when a deformation is present in the medium, part of the first emission signal is reflected from the medium to the sensor assembly. The sensor assembly receives this partially reflected emission signal to determine that one or more deformations are present in the medium, which deformations determine the medium to be unsuitable for printing. In contrast to the prior art, a medium is determined to be unsuitable for printing if and when part of the emission signal is reflected onto the sensor assembly. Deformations are thus indentified upon detection of a positive signal, unlike the prior art wherein the absence of a received signal indicates a deformation. No continuous alignment of the first emitter and the detector as in the prior art is required. The first emitter and the sensor assembly may be positioned with respect to one another such that any vibrations in the printing system do not direct part of the first emission signal to the sensor assembly, when no sheet or a sheet suitable for printing is present in the apparatus according to the present invention. Alternatively, a threshold may be set for a minimum intensity of the received emission signal, above which threshold the received emission signal is deemed relevant for identifying deformations in the medium. Thereby, the apparatus according to the present invention may be easily made vibration-proof, resulting in a highly reliable apparatus for defecting defects in a printing system.

The processor is arranged for comparing the sensor data to a reference, such that the processor determines the medium to be unsuitable for printing when the sensor data exceeds the reference. This is particularly advantageous when residual light or scattered signal is incident on the sensor assembly though the medium is suitable for printing, i.e. substantially deformation-free. A minimum level or threshold of the intensity of the first emission signal received by the sensor assembly may be defined below which the received signal is substantially disregarded as background noise or fluctuations and the medium is deemed suitable for printing. Basically, the processor is arranged to identify deformations in the sensor data from the sensor assembly, when the intensity of the received first emission signal exceeds the reference. As such, the reference defines an upper limit for the range wherein media are determined to be suitable for printing. When the intensity exceeds the predefined reference, the processor may be arranged to either directly reject the medium, specifically the sheet, or to initiate further analysis for analyzing the one or more deformations in the medium. The reference is preferably adjustable to suit the operating conditions of the printing system or the applied media type. By using the reference, the influence of residual background light in the sensor unit or fluctuations due to vibrations may be easily eliminated by setting an appropriate reference.

The apparatus according to the present invention further comprises a first emitter actuator for setting the first emitter at a height position, thereby selecting the emission height. The emission defines a rejection criterion for media passing through the apparatus. As such, the emission height and thereby the rejection criterion may be selected by the operator in accordance with the specifications of the current print job or media type. Preferably, the emission height is set automatically at the start a print job by the controller. Preferably, the controller is arranged to select the emission height in correspondence to a media type or thickness selected for a print job. Thereby, the emission height and the rejection criteria may be tuned or optimized to the current media type applied without interference by an operator. In consequence, printing may be performed 'unattended', allowing a single operator to manage multiple devices and achieve a high productivity.

As such, the object of the present invention is achieved.

More specific optional features of the invention are indicated in the dependent claims.

In an embodiment, the sensor assembly is positioned over the transport path at a distance there from. The medium on the transport path is supported by a medium support surface. The sensor assembly or array extends over the medium support surface at a distance therefrom. Thereby, a gap or spacing is provided between the sensor assembly and the medium support surface. The first emitter is configured to emit its parallel beam through the gap.

In another embodiment, the sensor assembly is a page-wide sensor array extending from one lateral side of the transport path to an opposite lateral side of the transport path. Within the plane of the transport path, the lateral or width direction is preferably defined as perpendicular to the transport direction. The page-wide sensor assembly thus extends over the full width of the transport path or the medium support surface.

In a further embodiment, the printing system according to the present invention further comprises a medium support surface defining the transport path, wherein:
- the sensor assembly extends laterally over the medium support surface at a distance therefrom.

In a preferred embodiment, the sensor assembly is positioned with respect to the first emitter such that the first emission signal is prevented from reaching the sensor assembly when the medium is suitable for printing, and at least part of the first emission signal is reflected from the medium to the sensor assembly when a deformation in the medium exceeds a predefined height. The sensor assembly is preferably positioned at an angle with respect to the line or plane of the first emission signal, such that the first emission signal is not directed towards the sensor assembly when the medium is suitable for printing. Preferably, the angle is such that the sensor assembly only receives part the first emission signal when it is reflected from a substantial deformation in the medium. As such, when the sensor assembly does not receive any emission signal, the medium is determined to be suitable for printing. When a signal above a predefined reference (to account for residual or background lightning or signal noise) is detected by the sensor assembly, the respective medium is determined unsuitable for printing. This allows for a fast and easy determination of the medium's suitability. In consequence, a relative cheap or simple processor may be applied to perform said determination, reducing the costs of the printing system.

In a preferred embodiment, the sensor assembly is positioned outside of the trajectory of the first emission signal, when no medium is present in the apparatus and/or when the medium is suitable for printing. Thereby, when the medium is suitable for printing, the first emission signal is prevented from reaching the sensor assembly. The sensor assembly is preferably positioned sufficiently out of the way of the uninterrupted first emission signal, such that even when the first emitter vibrates or is otherwise affected in its orientation, substantially no part of the first emission signal is received by the sensor assembly. Thereby, the apparatus according to the present invention is reliable despite vibrations or shocks to the first emitter or the sensor assembly. Further, as the sensor assembly is configured to detect a deformation when receiving only part of the first emission, relatively small deformations may be detected.

In another embodiment, the apparatus for defect detection further comprises a processor to determine the suitability of the medium for printing from sensor data generated by the sensor assembly and representative of the deformation in the medium; and a controller for controlling further progress of the medium along the transport path in dependence of the determined medium's suitability for printing. The controller is configured to control and/or to operate a removal device for removing the medium from the transport path of the printing system if and when the processor identifies one or more deformations in the surface geometry or topology of the medium that render the medium unsuitable for printing. In this way, the invention is configured to prevent the printing system from being stopped or negatively impacted by a defective print medium. When a medium deformation or defect is found, the medium can be removed from the transport path, e.g. via a removal device or ejector device that may switch or re-route the defective medium to a reject tray.

In a preferred embodiment, the printing system further comprises such a removal device for removing the medium from the transport path of the printing system. The controller is then configured to control the removal device to remove the medium from the transport path if the processor determines the medium to be unsuitable for printing. As it is desired to prevent defective mediums from reaching the printing heads of an image forming unit in the printing system, the controller is preferably configured to control and/or operate the removal device to remove the medium from the transport path upstream of the image forming unit or printing head unit of the system. To this end, the apparatus according to the present invention should be spaced a sufficient distance from the image forming unit; i.e. space is required to remove a medium containing deformations from the transport path. The apparatus according to the present invention may therefore be provided as a "sentry unit" for a location in the transport path of the printing system before (i.e. upstream of) the image forming unit to allow the removal device or ejector device to be positioned between the sentry unit and the image forming unit. The minimum distance along the transport path between the sentry unit and the image forming unit may be determined by a medium length and the processing time needed to detect and classify deformations. For example, a long medium could have a defect on the trailing edge. The processor will require time to process the data generated by the first sensor device and detect a deformation at the trailing edge after this has passed the measurement position. Thus, a leading edge of the medium should not have passed the removal device at the moment of sensing the trailing edge of the medium in order to ensure that a removal of the medium upstream of the image forming unit is still possible. In this regard, a medium transport mechanism for transporting or conveying the media to be printed between the sentry unit and the image forming unit may be different to a transport mechanism employed by each of the apparatus according to the present invention and the image forming unit. Specifically, this medium transport mechanism in between may be optimized for a reliable sheet removal or ejection.

In a further embodiment, the first emitter is positioned along the transport path and arranged for emitting a first emission signal at a predefined emission height over a plane of the transport path. The emission signal is emitted parallel to the plane of transport path and thereby parallel to the plane of a medium on the transport path. The first emission signal extends over the medium at the predefined height. When, specifically only when, the medium is sufficiently deformed to position a deformation (or part thereof) in the trajectory of the first emission signal, light from the first emission signal is reflected onto the sensor assembly. Thereby, the predefined emission height defines the maximum height allowed for deformations in the medium. It will be appreciated that deformations with heights below the predefined emission height do not trigger the sensor assembly to generate a signal indicative of the medium being unsuitable for printing. As such, a distinction may be made between 'smaller' deformations which are not considered to substantially impact the printing process or quality and 'larger' deformations which render a medium unsuitable for printing, e.g. due to the risk of head touch or paper jams. By selecting and/or setting the predefined emission height at the start of print job, the printing system may be tuned to the operating conditions of the printing system and/or the wishes of the operator. For example, the emission height may be increased to reduce the number of rejected media when an increased productivity is desired, whereas the emission height may be lowered when very high quality printing is desired. Additionally, the above mentioned reference may be adjusted or selected in a similar manner.

In another embodiment, the sensor assembly comprises a plurality of sensor devices forming a laterally page-wide sensor array. The processor is arranged to receive at least one detection signal generated by at least one of the plurality of sensor devices positioned at a lateral position over the transport path. The sensor assembly is preferably a page-wide or transport path-wide assembly array of laterally extending sensor devices. The sensor devices may be positioned in a laterally linear or staggered array to cover the full width of the transport path (or of the medium on it). Using a page-wide sensor assembly further proofs the apparatus according to the present invention against vibrations in the printing system, as the relatively wide or large coverage of the sensor assembly ensure that, despite any vibrations in the printing system, the reflected first emission is received by one or more of the sensor devices. Preferably, the sensor assembly extends parallel to the transport path (e.g. in the lateral direction) at a further predefined height above the transport path. The sensor assembly is then preferably further positioned above the trajectory of the first emission signal, such that both extend substantially parallel to one another when no medium is present in the apparatus according to the present invention. It will be appreciated that the term 'above' in this paragraph applies to a direction perpendicular to and extending away from the plane of the transport path.

In an embodiment, the processor is further arranged for determining a lateral position of a deformation in the medium from the at least one detection signal. The processor may apply information regarding the lateral position or ranges of each of the sensor devices in the sensor assembly to determine an indication of a lateral position or width of the one or more deformations wherefrom the first emission signal was reflected. The processor may for example analyze the intensities detected by the different sensor devices to determine a `center of mass' for the detected intensities. The position of the center of mass then corresponds to e.g. a center of the detected deformation. As such, the processor may obtain lateral position information for a deformation in the medium. Longitudinal position information regarding a deformation in the medium may be obtained from the medium's position on the transport path compared to the position of the first emitter or the sensor assembly. Thereby, a position as well as size or surface area of a deformation in the medium may be determined. The processor may use the position information to construct a two dimensional deformation map of the medium or even an indication of a height map of the medium. Additionally, the processor may determine one or more properties from the sensor data for each detected deformation, such as position, area, shape, etc. and use these properties to classify the deformation into one or more deformation type or shape classifications, such as wrinkle, dog ear, etc. The classification may in turn be applied for determining the medium's suitability for printing or determining a root cause for detected deformations.

In a further embodiment, the apparatus according to the present invention further comprises a second emitter arranged for emitting a second emission signal over the transport path and positioned along the transport path, such that the first and second emitters are positioned on opposite sides of the transport path. The first emitter is for example at a left side of the transport path whereas the second emitter is positioned at the right side of the transport path. By applying two opposing emitters, deformations in the medium may be illuminated from either lateral side, increasing the intensity of the emission signals reflected from a deformation, resulting in an increased intensity received by the sensor assembly and thus an improved accuracy of the apparatus according to the present invention. Applying laterally opposing emitters further allows the processor to determine a lateral range or width of a deformation exceeding the emission height.

The second emitter is preferably configured similar to the first emitter, for example emitting at the same predefined emission height as well at the same wavelengths. Alternatively, the second emitter may be positioned at a different height and emitting at different wavelengths than the first emitter, which allows the processor to derive height information for a deformation by distinguishing between the different wavelengths. It will be appreciated that within the scope of the present invention multiple emitters may be positioned on either side of the transport path, either at similar height or e.g. above one another.

In another embodiment, the printing system according to the present invention, further comprises an image forming unit for printing an image on the medium, wherein the apparatus according to the present invention is structured similar to the image forming unit, such that a medium in the apparatus according to the present invention is exposed to operating conditions similar to operating conditions the medium is exposed to in the image forming unit. Operating conditions in the apparatus are controlled to be similar, the same or identical, to those in the image forming device. Thereby, the deformation of the medium in the apparatus according to the present invention is similar, or even identical, to its deformation in the image forming device. This significantly reduces the chance of a deformation being added or removed from the medium in the image forming device as compared the medium in the apparatus. This not only reduces the risk of incorrectly classifying mediums for avoiding "head touch", but also reduces medium consumption as fewer media are incorrectly rejected. As such performance and production may be improved. In the above described manner, the printing system according to the present invention allows for an accurate determination of defects in a medium to be printed. Thereby, an accurate deformation detection device is provided.

In a further aspect, the present invention provides an apparatus for defect detection in a printing system according to claim 11. A medium may be determined suitable for printing when the first emission signal does not reflect of a deformation in the medium onto the sensor assembly. The first emission signal may in the latter case be e.g. substantially prevented from reaching the sensor assembly. The apparatus according to the present invention determines a medium to be suitable for printing when no emission signal is reflected or redirected from the medium onto the sensor assembly. Minor displacements of the first emitter, e.g. due to vibrations in the printing system, do not redirect any emission signal onto the sensor assembly, making the apparatus according to the present invention accurate despite vibrations and the like. Substantial deformations in the medium reflect emission signal or light from the first and/or second emitter onto the sensor assembly, such that the apparatus may generate sensor data based on the received part of emission signal. The apparatus may then analyze the sensor data for the presence of deformations and determine the medium's suitability for printing based thereon. Thereby, the object of the present invention has been achieved.

In an even further aspect, the present invention provides a method for detecting defects in a medium in a printing system according to claim 12.

When the first emission signal is not reflected of the medium by a protruding deformation onto the sensor assembly, the medium is deemed suitable for printing. Only light above a predefined intensity threshold received by the sensor assembly is applied to for classifying a medium as unsuitable or unsuited for printing. The intensity threshold may be selected such that the outcome of the determination of the medium's suitability is not negatively affected by vibrations in the printing system, increasing the accuracy and reliability of the determination of the medium's suitability for printing. Thereby, the object of the present invention has been achieved.

In an embodiment, the method according to the present invention further comprises the steps of:
- analyzing the detected at least part of the emission signal to identify deformations in the medium; and
- removing the medium from the transport path when an identified deformation renders the medium unsuitable for printing.

Thereby unsuitable media, specifically sheets, may be ejected from the transport path before reaching the image forming unit and coming into contact with a print head in the image forming unit.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given herein below and the accompanying schematical drawings which are given by way of illustration only, and thus are not limitative of the present invention, and wherein:
Fig. 1 shows a schematic representation of an inkjet printing system for printing sheets;
Fig. 2 shows a schematic top view of an apparatus for defect detection in a printing system according to the present invention;
Fig. 3 shows a schematic side view of the apparatus in Fig. 2 during operation for: A) a sheet suitable for printing and B) sheet unsuitable for printing;
Fig. 4 shows schematic representation of A) a further embodiment an apparatus for defect detection in a printing system according to the present invention and B) the corresponding data when detecting a wrinkle deformation;
Fig. 5 shows schematic representation of A) another embodiment an apparatus for defect detection in a printing system according to the present invention and B) the corresponding data when detecting a dog ear deformation;
Fig. 6 shows a schematic representation of an inkjet printing system for printing web media; and
Fig. 7 shows a schematic diagram with the steps of a method for according to the present invention.

### DETAILED DESCRIPTION OF THE DRAWINGS

The present invention will now be described with reference to the accompanying drawings, wherein the same reference numerals have been used to identify the same or similar elements throughout the several views.

### Printing process

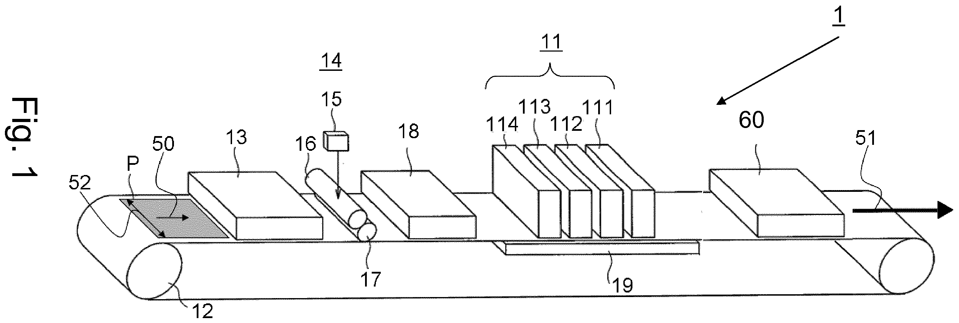

A printing process in which the inks according to the present invention may be suitably used is described with reference to the appended drawings shown in Fig. 1. Fig. 1 shows a schematic representation of an inkjet printing system 1.

Fig. 1 shows that a sheet of a receiving medium, in particular a machine coated medium, P, is transported in a direction for conveyance as indicated by arrows 50 and 51 and with the aid of transportation mechanism 12. Transportation mechanism 12 may be a driven belt system comprising one (as shown in Fig. 1) or more belts. Alternatively, one or more of these belts may be exchanged for one or more drums. A transportation mechanism may be suitably configured depending on the requirements (e.g. sheet registration accuracy) of the sheet transportation in each step of the printing process and may hence comprise one or more driven belts and/or one or more drums. For a proper conveyance of the sheets of receiving medium, the sheets need to be fixed to the transportation mechanism. The way of fixation is not particularly limited and may be selected from electrostatic fixation, mechanical fixation (e.g. clamping) and vacuum fixation. Of these vacuum fixation is preferred.

The printing process as described below comprises of the following steps: media pre-treatment, image formation, drying and fixing and optionally post treatment.

### Media pre-treatment

To improve the spreading and pinning (i.e. fixation of pigments and water-dispersed polymer particles) of the ink on the receiving medium, in particular on slow absorbing media, such as machine coated media, the receiving medium may be pretreated, i.e. treated prior to printing an image on the medium. As an application way of the pre-treatment liquid, any conventionally known methods can be used. Specific examples of an application way include: a roller coating, an ink-jet application, a curtain coating and a spray coating. There is no specific restriction in the number of times with which the pre-treatment liquid is applied. It may be applied at one time, or it may be applied in two times or more. Application in two times or more may be preferable, since cockling of the coated printing paper can be prevented and the film formed by the surface pre-treatment liquid will produce a uniform dry surface having no wrinkle by applying in 2 steps or more.

Especially a roller coating (see 14 in Fig. 1) method is preferable because this coating method does not need to take into consideration of ejection properties and it can apply the pre-treatment liquid homogeneously to a recording medium.

Fig. 1 shows that the sheet of receiving medium P may be conveyed to and passed through a first pre-treatment module 13, which module may comprise a preheater, for example a radiation heater, a corona/plasma treatment unit, a gaseous acid treatment unit or a combination of any of the above. Optionally and subsequently, a predetermined quantity of the pre-treatment liquid is applied on the surface of the receiving medium P at pre-treatment liquid applying member 14. Specifically, the pre-treatment liquid is provided from storage tank 15 of the pre-treatment liquid to the pre-treatment liquid applying member 14 composed of double rolls 16 and 17. Each surface of the double rolls may be covered with a porous resin material such as sponge. After providing the pre-treatment liquid to auxiliary roll 16 first, the pre-treatment liquid is transferred to main roll 17, and a predetermined quantity is applied on the surface of the receiving medium P. Subsequently, the coated printing paper P on which the pre-treatment liquid was supplied may optionally be heated and dried by drying member 18 which is composed of a drying heater installed at the downstream position of the pre-treatment liquid applying member 14 in order to decrease the quantity of the water content in the pre-treatment liquid to a predetermined range. It is preferable to decrease the water content in an amount of 1.0 weight% to 30 weight% based on the total water content in the provided pre-treatment liquid provided on the receiving medium P.

To prevent the transportation mechanism 12 being contaminated with pre-treatment liquid, a cleaning unit (not shown) may be installed and/or the transportation mechanism may be comprised multiple belts or drums as described above. The latter measure prevents contamination of the upstream parts of the transportation mechanism, in particular of the transportation mechanism in the printing region.

### Image formation

Image formation is performed in such a manner that, employing an inkjet printer loaded with inkjet inks, ink droplets are ejected from the inkjet heads based on the digital signals onto a print medium.

Although both single pass inkjet printing and multi pass (i.e. scanning) inkjet printing may be used for image formation, single pass inkjet printing is preferably used since it is effective to perform high-speed printing. Single pass inkjet printing is an inkjet recording method with which ink droplets are deposited onto the receiving medium to form all pixels of the image by a single passage of a receiving medium underneath an inkjet marking module.

In Fig. 1, 11 represents an inkjet marking module comprising four inkjet marking devices, indicated with 111, 112, 113 and 114, each arranged to eject an ink of a different color (e.g. Cyan, Magenta, Yellow and blacK). The nozzle pitch of each head is e.g. about 600 dpi. In the present invention, "dpi" indicates a dot number per 2.54 cm.

Fig. 1 shows that after pre-treatment, the receiving medium P is conveyed to upstream part of the inkjet marking module 11. Then, image formation is carried out by each color ink ejecting from each inkjet marking device 111, 112, 113 and 114 arranged so that the whole width of the receiving medium P is covered.

Optionally, the image formation may be carried out while the receiving medium is temperature controlled. For this purpose a temperature control device 19 may be arranged to control the temperature of the surface of the transportation mechanism (e.g. belt or drum) underneath the inkjet marking module 11. The temperature control device 19 may be used to control the surface temperature of the receiving medium P, for example in the range of 30°C to 60°C. The temperature control device 19 may comprise heaters, such as radiation heaters, and a cooling means, for example a cold blast, in order to control the surface temperature of the receiving medium within said range. Subsequently and while printing, the receiving medium P is conveyed to the down stream part of the inkjet marking module 11.

### Drying and fixing

After an image has been formed on the receiving medium, the prints have to be dried and the image has to be fixed onto the receiving medium. Drying comprises the evaporation of solvents, in particular those solvents that have poor absorption characteristics with respect to the selected receiving medium.

Fig. 1 schematically shows a drying and fixing unit 60, which may comprise a heater, for example a radiation heater. After an image has been formed, the print is conveyed to and passed through the drying and fixing unit 60. The print is heated such that solvents present in the printed image, to a large extent water, evaporate. The speed of evaporation and hence drying may be enhanced by increasing the air refresh rate in the drying and fixing unit 60. Simultaneously, film formation of the ink occurs, because the prints are heated to a temperature above the minimum film formation temperature (MFT). The residence time of the print in the drying and fixing unit 60 and the temperature at which the drying and fixing unit 60 operates are optimized, such that when the print leaves the drying and fixing unit 60 a dry and robust print has been obtained. As described above, the transportation mechanism 12 in the fixing and drying unit 60 may be separated from the transportation mechanism of the pre-treatment and printing section of the printing apparatus and may comprise a belt or a drum.

### Post treatment

To increase the print robustness or other properties of a print, such as gloss level, the print may be post treated, which is an optional step in the printing process.

### Defect detection

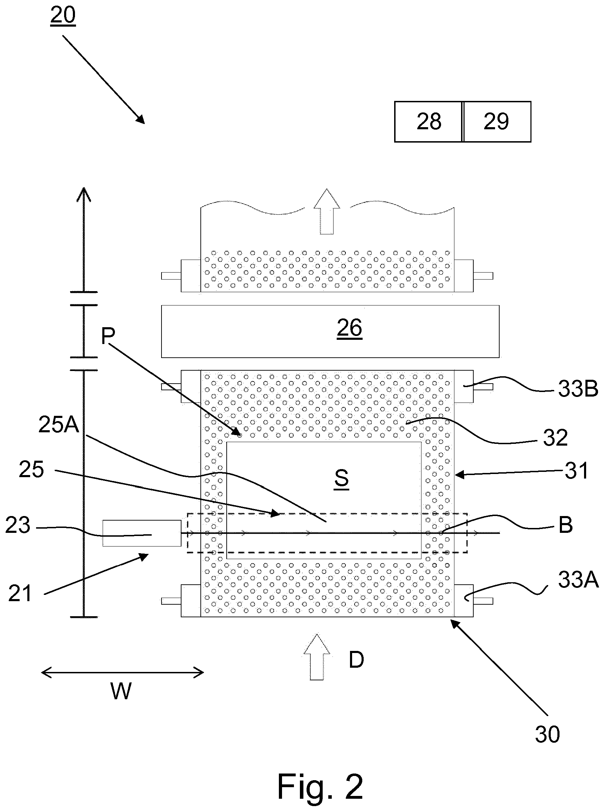

With reference now to Fig. 2 of the drawings, the inkjet printing system 1 according to the preferred embodiment of the invention is shown to include an apparatus 20 for detecting defects in the printing system 1, and particularly for identifying deformations D in the sheets S of print medium S when the sheets S are on the transport path P of the printing system 1. In this particular embodiment, the apparatus 20 comprises a sensing unit 21, which processes the sheets S on the transport path P before those sheets S enter the image forming device 11. In this regard, it will be noted that the printing system 1 in Fig. 2 has a transport path P which includes both a simplex path and a duplex path and the sensing unit 21 of the apparatus 20 is arranged such that sheets S input on the simplex path and also returning on the duplex path all pass via the sensing unit 21.

When performing the sensing or measuring of the surface geometry or topology of the sheets S on the transport path P of printing system 1 with the sensing unit 21, it is highly desirable for the purposes of accuracy and reliability that the sheets S are transported or conveyed in the sensing unit 21 in substantially the same manner as those sheets S are later transported in the image forming unit or inkjet marking module 11. To this end, the sensing unit 21 includes a sheet conveyor mechanism 30 that simulates the sheet transport conditions provided by the transport mechanism within the inkjet marking module 11. In this regard, both the conveyor mechanism 30 and the transport mechanism include a belt transport device 31 with vacuum sheet-holding pressure, as seen in Fig. 2. The transport mechanism 30 comprises a pair of rotatable support rollers 33A, 33B for driving the movement of the endless belt member 31. The belt member 31 is provided with a plurality of vacuum holes or perforations through which air may be sucked to a suction system (not shown). The sheets S are held by suction against the medium support surface 32 of the transport mechanism 30 in a manner identical to that during printing. The manner of transport, i.e. the configuration of the transport mechanism (materials, dimensions, vacuum hole pattern, etc.), the transport speed, and/or the suction force are preferably similar or identical to those in the inkjet marking module 11. Additionally, the sensing unit 21 may comprise atmospheric control means to maintain the atmospheric conditions (such as temperature, humidity, etc.) in the sensing unit 31 similar to those in the inkjet marking module 11.

The sensing unit 21 comprises a first emitter 23 positioned to one side of the transport path P formed by the belt member 31. The first optical emitter 23 is arranged for emitting an optical emission signal or beam B at a predefined height or distance over the medium support surface 32. In Fig. 2, the preferably collimated light beam B is aligned in the lateral direction W. The first emitter 23 emits the beam B substantially parallel to the medium support surface 32. The predefined height of the beam B is selected such that the beam B travels over the sheet S on the medium support surface 32 when said sheet S is substantially free of defects or deformations (or when said deformations do not exceed a predefined height). However, when a deformation in the sheet S extends sufficiently upwards from the medium support surface 32 to come into contact with the beam B, light from the beam B is reflected or scattered in other directions than the lateral direction W. A portion of the reflected light is then directed upwards.

To receive a portion of the light reflected of a deformation, the sensing unit 21 comprises a sensor assembly 25 extending in the lateral direction W over the medium support surface 32 of the transport mechanism 30. The sensor assembly 25 comprises at least one first sensor device 25A in the form of an optical sensor 25A, such as an optical line scanner, laser scanner, or light sensitive diode. The sensor assembly 25 is provided within the sensing unit 21 for sensing the surface geometry or topology of the sheets S as they travel on a first pass or a second pass along the transport path P. The one or more optical sensor devices 25A in the sensor assembly 25 generate sensor data indicative of deformations in the three-dimensional surface geometry or topology of each sheet S sensed or scanned. The first sensor devices 25A are positioned beside one another in the lateral direction W. Each first sensor device 25A in this lateral array then corresponds to a lateral range or position (e.g. a portion of the width of transport path P). When a first sensor device 25A receives light reflected of a deformation, the lateral position (or an indication thereof) of said deformation can be derived from the data generated by the one or more first sensor devices 25A, as the lateral position of the respective first device sensor device 25A is stored in the processor 29.

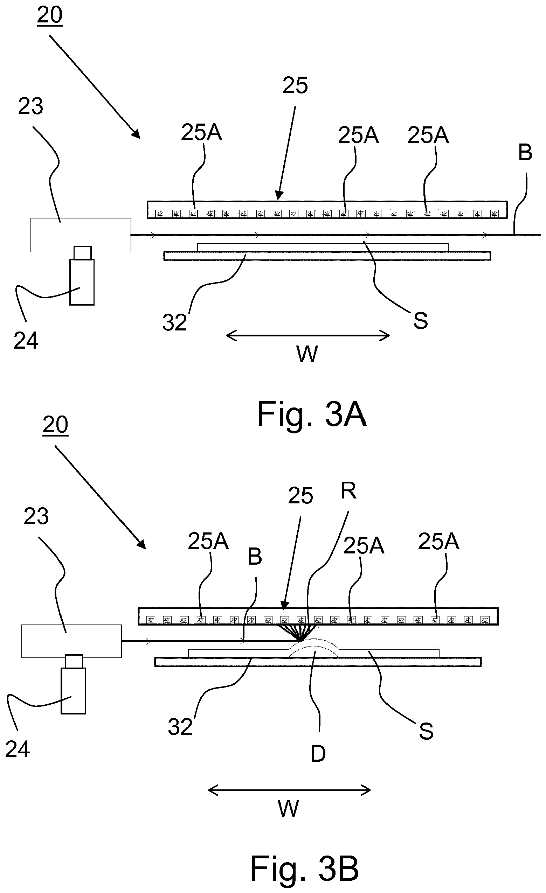

The workings of the sensing unit 21 are illustrated in Fig. 3A and 3B. Fig. 3A shows a cross-section of the sensing 21 unit taken perpendicular to the transport direction D. The sheet S is supported on and held against the medium support surface 32. The first emitter 23 is provided with an actuator 24 for adjusting or setting the height of the first emitter 23. Thereby the distance between the medium support surface 32 and the emitted optical beam B may be selected and set. Said height is preferably selected based on the thickness of the sheet S or its media type. The controller 28 preferably selects the height of the first emitter 23 and of the beam B based on media information provided by the printing system 1, for example in the form of a media catalogue from which the medium S is selected. Aside from the media thickness or type, the current spacing of the print head gap in the inkjet marking module 11 may be taken into account in selecting the height of the first emitter 23.

In Fig. 3A, the sheet S is free of deformations and the beam B is able to extend freely through the volume between the sheet S and the sensor assembly 25 without being received by the sensor assembly 25. The beam B is parallel to the plane of the medium support surface 32. Substantially no light from the first emitter 23 is directed onto one or more of the first sensor devices 25A of the sensor assembly 25. A 'zero' signal or intensity then identifies a sheet suitable for printing. To improve the accuracy, the sensing unit 21 may be optically shielded to prevent ambient light from entering the sensing unit 21. When the sensor assembly 25 receives no reflected light, the sheet S is deemed suitable for printing and will be passed on to the inkjet marking module 11.

Fig. 3B illustrates a deformation D in the sheet S. The deformation D extends vertically beyond the selected emission height of the first emitter 23 and thus into the path of the beam B. The emission signal or beam B is then reflected by the deformation D. Part of the reflected light R is directed to the sensor assembly 25. One or more first sensor devices 25A receive portions of the reflected light R, though in different intensities. In accordance with the received intensities of the sensor devices 25A, the sensor assembly 25 generates sensor data. The sensor assembly 25 then transmits said data to the processor 29, which receives said sensor data and determines the suitability of the sheet S for printing from said sensor data.

The sensor data or deformation data from the sensor assembly 25 is then transmitted (e.g. either via a cable connection or wirelessly) to a controller 28 which includes a processor 29 for processing and analysing the digital image data to detect any defect or deformation D in the surface geometry or topology of each sheet S sensed or scanned. A reference or minimum intensity threshold may be provided for each first sensor device 25A to eliminate unwanted signal from noise such as background lighting. When the processor 29 determines that said threshold has been exceeded for one or more first sensor devices 25A, the processor 29 determines the sheet S to be unsuitable for printing. The sensing unit 21 is thus arranged to scan the sheets S for detecting and measuring any deformations or defects D before the sheets S enter the image forming device or inkjet marking module 11. In this way, if the processor 29 determines that a sheet S on the transport path P includes a defect or deformation D that would render the sheet unsuitable for printing, the controller 28 is configured to prevent the sheet S from progressing to the inkjet marking module 11.

To prevent unsuitable sheets S from reaching the inkjet marking module 11, the sensing unit 21 is therefore desirably provided as a separate sentry unit 21 positioned on the transport path P sufficiently upstream of the inkjet marking module 11. The controller 28 and processor 29 may be integrated within the sentry unit 21 or they may be separately or remotely located. The apparatus 20 according to the present invention further comprises a removal device 26 or ejector device 26 for directing a sheet S from the transport path P to a rejection transport path before said sheet S reaches the inkjet marking module 11. The removal device 26 may be a transport switch 26 controlled by the controller 28. When the processors 29 determines that a sheet S is unsuitable for printing based on the data from the sensing unit 21, the controller 28 controls the removal device 26 to direct said sheet S from the transport path P onto a rejection transport path leading to a reject output tray.

### Defect classification

The laterally neighbouring first sensor devices 25A of the sensor assembly 25 allow the processor 29 to determine lateral position information for a deformation D in the sheet S. The processor 29 thereto utilizes information or knowledge regarding the lateral position of each first sensor device 25A and/or the lateral range of the medium support surface 32 covered by a first sensor device 25A. This information may be absolute (e.g. numerical ranges or widths) or relative (e.g. the order wherein the devices 25A are arranged). When, as shown in Fig. 3B, a deformation D reflects light from the horizontal beam B upwards to the sensor assembly 25, a plurality of first sensor devices 25A are illuminated. Each first sensor device 25A is preferably arranged for determining the intensity of the light transmitted to that first sensor device 25A. The processor 28 may then compare these different intensities and using the information regarding the spatial arrangement of the first sensor devices 25A to form an indication of the lateral position, lateral width, lateral are and/or the three dimensional structure of the deformation, for example an absolute or relative height map of the deformation D or at least part of the surface of the sheet S. As such a line-by-line height or deformation map (or at least an indication thereof) of the sheet S may be obtained. In a fast operation mode the processor 29 is arranged to deem a sheet unsuitable for printing when a deformation D has been detected in the path of the optical signal B. When no light is reflected of a deformation D onto the sensor assembly 25, the processor 29 registers the sheet S as suitable for printing. It will be appreciated that the processor 29 may further apply a reference such an intensity threshold, such that only detected intensities exceeding said reference trigger the identification of a deformation. In a more advanced operation mode, the processor 29 is arranged for further analysis of the data generated by the sensor assembly 25 to identify the positions of the deformations D on the sheet S.

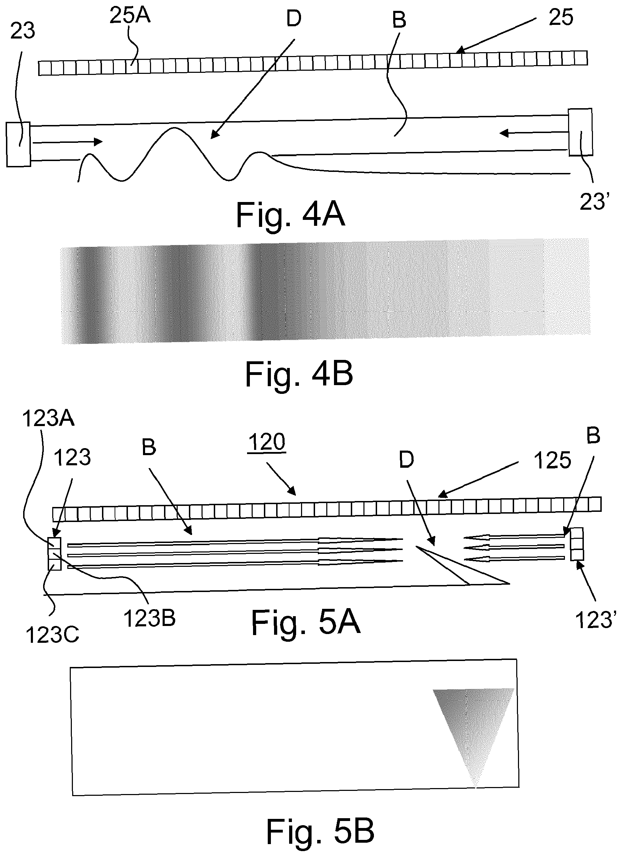

The processor 29 is preferably arranged to derive one or more properties of a detected deformation D from the data. These properties may be applied to categorize and classify the deformation D into one of a plurality of classifications. As such, the detected deformations may be classified by e.g. shape or type, such as wrinkle, dog ear, etc. Fig. 4A for example shows a sheet S with a wrinkle-type deformation D. In Fig. 4A, one or beams B are transmitted across the medium support surface 32 from opposite sides of the transport path P. The first emitter 23 is positioned on one lateral side (left) of the transport path P, whereas a second emitter 23' is positioned at the other lateral side (right) of the transport path P. The emitters 23, 23' emit opposing beams B. It will be appreciated that a plurality of emitters 23, 23' may further be provided on either side, for example at different heights, wherein the lowest emitter 23, 23' substantially determines the threshold height for print suitability. The higher emitters 23, 23' then provide additional light intensity to better illuminate the deformations D. Alternatively a wider beam B may be used.

The wrinkle deformation D in Fig. 4A is illuminated from both lateral sides, such that light is reflected from the wrinkle deformation D onto the sensor assembly 25. The sensor assembly 25 comprises a plurality of the first sensor devices 25A, each corresponding to a predefined lateral range or width. The resulting intensity signal or deformation map for a section of the sheet S is illustrated in Fig. 4B. It can be seen that in this case the wrinkles D extend in the transport direction D across the sheet S. The processor 29 is preferably arranged for image recognition such that the wrinkle shape may be deduced from the two dimensional map. The processor 29 may e.g. derive the positions of the local maxima on the sheet S, the center of gravity of a deformation or a bounding box, as properties for classifying the deformations D. Further, an algorithm for classifying deformations D as described in PCT/EP2015/073094 may be used, which application is herein incorporated by reference.

Fig. 5A illustrates the detection of a dog ear type defect D, which distinguishes itself by a gradient in intensity across the area of the dog ear deformation D, whereas two edges of the dog ear D show a distinct and abrupt drop in intensity. The properties for a dog ear type of defect D as shown in Fig. 5B include maximum height H located at corner of bounding box, a centre of gravity located near a diagonal of the bounding box, and an area of approximately 50% of bounding box area.

In the embodiment in Fig. 5A, each emitter 123, 123' comprises a plurality of emission units 123A, 123B, 123C. The emission units 123A-C are positioned at different heights with respect to one another and emit at different wavelengths. The bottom emitter 123C is positioned at the predefined height which determines the suitability of the sheet S for printing. The higher positioned emission units 123A-B are positioned to illuminate higher reaching regions of the deformations D. Information indicative of the height position of each emission unit 123A-C is provided to the processor 29, which may identify the different reflected signals from the different emission units 123A-C based on their wavelengths. Thereby, the processor 28 may utilize the height position information for each emission unit 123A-C to determine a more accurate height map of the sheet S. An additional advantage is that the analysis of the data is relatively fast and simple as the data may be sorted based on wavelength or colour and a similar algorithm for each wavelength as described above may be used. The wavelength or colour of the reflected light may be used to quickly determine the minimum height of an area of a deformation D. Classifying the deformation D allows for a more versatile determination of print suitability than by deformation height alone. Also, by tracking the classification of deformation D over time the run-ability of the printing system may be tracked and analyzed.

### Print system control

After the image data has been analysed by the processor 29 and the defects or deformations D within the sheet S have been extracted, the controller 28 may transmit a control signal (either via cable or wirelessly) to a removal device or ejector device 26 for regulating the transport or conveyance of the sheets S to the image forming device or inkjet marking module 9. In particular, if the sheet S has been determined by the processor 29 to include one or more deformations D with a height, size or extent above a predetermined threshold sufficient to render the sheet unsuitable for printing, the controller 28 is configured to control or operate the removal device 26 to remove or eject the sheet S from the transport path P to a reject tray. In this way, sheet jams within the print module or image forming device 11 may be avoided when sheets S are found to contain too much deformation. The removal device 26 located between the sentry unit 21 and the inkjet marking module 11 can employ different means optimized for redirecting the sheets S from the transport path P towards the reject tray. In this particular embodiment, a pivotable transport switch is used. Such a switch is described in the European Patent Application with number EP3020670 A1, published on 2016-05-18 and incorporated herein by reference. In principle, control of the removal device or ejector device 26 by the controller 28 can be based solely upon a maximum allowable height or magnitude to perform its job. However, information gathered on deformations D in the sheet S may also be used for statistical purposes to determine media run-ability.

At least one second sensor (not shown) for sensing the surface geometry or topology of the sheet S located within the inkjet marking module 11 can be used to provide feedback or correlation data to the sentry unit 21 or to the controller 24 to increase the accuracy of the measurement of the sheet deformation D. Various parameters affecting the simulated transport conditions via the sheet conveyor mechanism 30 in the sentry unit 21 can be changed using this feedback signal to optimize the prediction result. Several sensing or measurement techniques can be used to sense or measure sheet deformation D.

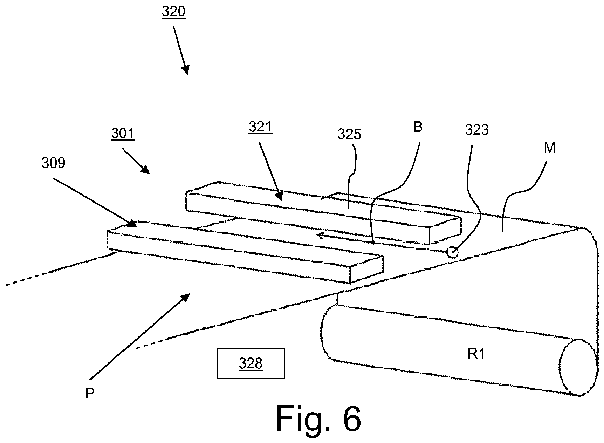

It will be appreciated that the present invention may be applied to many types of printing systems 1, 301, regardless of the type of inkjet marking module 11, 311 or the ink type applied. The present invention may further be implemented for a roll-printer 301 as shown in Fig. 6. The printing system 301 comprises a roll holder for rotatably supporting a media roll R1 of a web medium M, which may be paper, foil, textile, etc. The medium M is unspooled from the media roll R1 along the transport path P of the printing system 301. The web medium M passes through an apparatus for defect detection 320, then onto the inkjet marking module 311 to an output device. The output device may be a take-up roll, as applied in roll-to-roll printing, or an output tray, as known from roll-to-sheet printing. The apparatus 320 is configured as described above, namely including a sentry unit 321, which comprises an emitter 323 emitting an optical beam B over the plane of the transport path P as well as a sensor assembly 325 extending page-wide over the transport path P. Deformations D in the web M are detected by light reflected of said deformations D onto the sensor assembly 325, when these deformations D exceed the predefined height as determined by the height position of the emitter 323. Upon detection of a deformation D by the sensor assembly 325, the controller 328 may perform one of the following actions: emitting an alert signal to an operator, adjusting, preferably reducing, the transport and print speed of the printing system 301, or stopping the printing system 301, specifically the transport mechanism, such that the detected deformation D does not reach the inkjet marking module 311. In the latter case, the detected deformation D is positioned in between the inkjet marking module 311 and the sentry unit 321, preferably easily accessible to an operator who may take appropriate action to remove or reduce the deformation D.

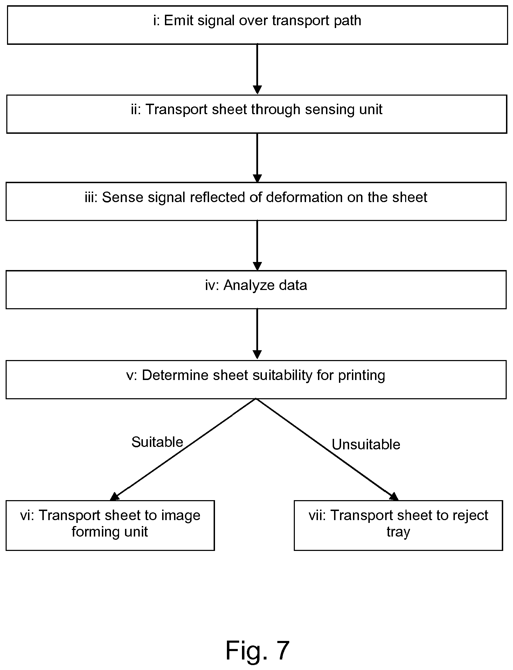

Referring now to Fig. 7 of the drawings, a flow diagram is shown that schematically illustrates the steps in a method of detecting defects in a printing system 1 according to the preferred embodiment of the invention described above with respect to Figs. 1 to 6. In this regard, the first box i of Fig. 7 represents the step of emitting the emission signal B at a predefined emission height over a plane of the transport path of the printing system. Box ii represents the step of feeding or conveying a sheet S of paper or another print medium along a transport path P of the printing system 1. The sheet enters the sensing unit 21 for detecting a deformation in a surface geometry or a topology of the sheet of print medium S by the sensing unit 21 as the sheet S travels along the transport path P. When deformations D on the sheet S come into contact with the signal B, the signal is reflected onto the sensor assembly 25 extending over the medium support surface 32. By collecting at least part of the reflected light, the sensor assembly 25 is able to generate image data which is representative of the surface geometry or topology of the deformation D or the sheet S. The data is then transported to the processor 29 for analysis. The fourth box iv then represents the step of processing the surface geometry or topology data generated in the sensing step to detect and optionally to classify deformations D in the surface geometry or topology of the sheet S, e.g. using the processor 29. Dependent on the outcome of the analysis, the sheet S is deemed either suitable or unsuitable for printing, which is shown in the fifth box v. The processor 29 determines the sheet's suitability for printing based e.g. on one or more deformations D exceeding the predefined height as defined by the height of the emitter beam B. Suitability may further be determined based on classification of the deformations D based on one more properties derived from the data. The boxes vi and vii in Fig. 7 of the drawings then represent the steps of controlling the further progress of the sheet S along the transport path P of the printing system 1 depending upon the deformations D in the surface geometry or topology of the sheet detected and classified in the processing step. That is, if the processor 29 determines that one or more of the detected deformations D render the sheet S unsuitable for printing, the controlling step of box vii includes effecting removal of the sheet S from the transport path P of the printing system 1 to prevent the sheet progressing to the inkjet marking module 11. On the other hand, if the processor 29 does not detect any relevant deformation D that would render the sheet S unsuitable for printing, the controller 24 then permits the sheet S to progress on the transport path P to the inkjet marking module 11, as shown in box vi.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims are herewith disclosed.

Further, it is contemplated that structural elements may be generated by application of three-dimensional (3D) printing techniques. Therefore, any reference to a structural element is intended to encompass any computer executable instructions that instruct a computer to generate such a structural element by three-dimensional printing techniques or similar computer controlled manufacturing techniques. Furthermore, such a reference to a structural element encompasses a computer readable medium carrying such computer executable instructions.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

The scope of the invention is defined by the following claims.

## Claims

1. A printing system (1) comprising an apparatus (20; 120; 320) for defect detection in a printing system (1), comprising:
- a transport mechanism for transporting a medium (S; M) in a transport direction (51) comprising an endless belt defining a planar medium support surface (32) extending between a pair of rotatable support rollers (33A, 33B);
- a first emitter (23; 23'; 123; 323) for emitting a first optical emission signal beam (B) towards a medium (M; S) on the planar medium support surface (32), wherein the first emitter (23; 23'; 123; 323) is configured for emitting the first emission beam (B) parallel to the planar medium support surface (32);
- a sensor assembly (25; 125; 325) extending in a lateral direction (W) perpendicular to the transport direction (51) over planar medium support surface (32) and arranged for receiving at least part of the first emission beam (B) reflected from the medium (M; S);
- a controller (28) with a processor (29) for identifying a deformation in the medium (M; S) and determining the medium (M; S) to be unsuitable for printing when sensor data from sensor assembly (25; 125; 325) exceeds a predetermined reference; and
- an actuator (24) for adjusting and/or setting a height of the first emitter (23), such that a distance between the medium support surface (32) and the emitted optical beam (B) is selected and/or set.

2. The printing system (1) according to claim 1, wherein the sensor assembly (25; 125; 325) is positioned over the medium support surface (32) at a distance there from.

3. The printing system (1) according to any of the previous claims, wherein the sensor assembly (25; 125; 325) is a page-wide sensor array extending from one lateral side of the medium support surface (32) to an opposite lateral side of the medium support surface (32).

4. The printing system (1) according to any of the previous claims, - wherein
- the sensor assembly (25; 125; 325) extends laterally over the medium support surface (32) at a distance therefrom.

5. The printing system (1) according to any of the previous claims, wherein the sensor assembly (25; 125; 325) is positioned with respect to the first emitter (23; 23'; 123; 323) such that:
the first emission beam (B) is prevented from reaching the sensor assembly (25; 125; 325) when the medium (M; S) is suitable for printing; and
at least part of the first emission beam (B) is reflected from the medium (M; S) to the sensor assembly (25; 125; 325) when a deformation (D) in the medium (M; S) exceeds a predefined height.

6. The printing system (1) according to any of the previous claims, wherein the sensor assembly (25; 125; 325) is positioned outside of the trajectory of the first emission beam (B), when no medium (M; S) is present in the apparatus for defect detection (20; 120; 320).

7. The printing system (1) according to any of the previous claims, wherein
the controller (28) is further configured for controlling further progress of the medium (M; S) along a remainder of a transport path (P) downstream of the medium support surface (32) in dependence of the determined medium's suitability for printing;
a removal device (26) for removing the medium (M; S) from the transport path (P) of the printing system (1), wherein the controller is configured to control the removal device (26) to remove the medium (M; S) from the transport path (P) if the processor determines the medium (M; S) to be unsuitable for printing.

8. The printing system (1) according to any of the previous claims, wherein:
during use the first emitter (23; 23'; 123; 323) is positioned along the medium support surface (32) and arranged for emitting a first emission beam (B) at a predefined emission height over a plane of the transport path section (P).

9. The printing system (1) according to any of the previous claims, wherein the controller (28) is arranged to select the emission height in correspondence to a media type or thickness selected for a print job.

10. The printing system (1) according to any of the previous claims, wherein:
the sensor assembly (23; 23'; 123; 323) comprises a plurality of sensor devices forming a laterally page-wide sensor array; and
the processor (29) is arranged to receive at least one detection signal generated by at least one of the plurality of sensor devices positioned at a lateral position over the transport path section (P).

11. An apparatus (20; 120; 320) for defect detection, comprising:
an apparatus (20; 120; 320) for defect detection in a printing system (1),
comprising:
- a transport mechanism for transporting a medium (S; M) in a transport direction (51) comprising an endless belt defining a planar medium support surface (32) extending between a pair of rotatable support rollers (33A, 33B);
- a first emitter (23; 23'; 123; 323) for emitting a first optical emission signal beam (B) towards a medium (M; S) on the planar medium support surface (32), wherein the first emitter (23; 23'; 123; 323) is configured for emitting the first emission beam (B) parallel to the planar medium support surface (32);
- a sensor assembly (25; 125; 325) extending in a lateral direction (W) perpendicular to the transport direction (51) over planar medium support surface (32) and arranged for receiving at least part of the first emission beam (B) reflected from the medium (M; S);
- a controller (28) with a processor (29) for identifying a deformation in the medium (M; S) and determining the medium (M; S) to be unsuitable for printing when sensor data from sensor assembly (25; 125; 325) exceeds a predetermined reference; and
- an actuator (24) for adjusting and/or setting a height of the first emitter (23), such that a distance between the medium support surface (32) and the emitted optical beam (B) is selected and/or set.

12. Method for detecting defects in a medium in a printing system (1), comprising the steps of:
- selecting a height for a first emitter based on a thickness of a planar medium (M; S) and/or its media type and setting the emitter at said height with respect to a medium support surface (32);
- transporting a medium (M; S) over the planar medium support surface (32) in a transport direction (51);
- the first emitter (23; 23'; 123; 323) emitting an emission beam (B) towards the medium (M; S) on the planar medium support surface (32) in the printing system (1) parallel to medium support surface (32);
- determining the suitability of the medium (M; S) for by printing by:
• detecting at least part of the emission beam (B) reflected from the medium (M; S) and comparing the sensor data to a reference and determining the medium to be unsuitable for printing when the sensor data exceeds the reference.

13. The method according to claim 12, further comprising the steps of:
- analyzing the detected at least part of the emission beam (B) to identify deformations in the medium (M; S); and
- removing the medium (M; S) from the transport path (P) when an identified deformation (D) renders the medium (M; S) unsuitable for printing.

## Patentansprüche

1. Ein Drucksystem (1) mit einer Vorrichtung (20; 120; 320) zur Fehlererkennung in einem Drucksystem (1), umfassend:
- einen Transportmechanismus zum Transportieren eines Mediums (S; M) in einer Transportrichtung (51), der ein Endlosband umfasst, das eine ebene Medienträgerfläche (32) definiert, die sich zwischen einem Paar von drehbaren Trägerrollen (33A, 33B) erstreckt;
- einen ersten Emitter (23; 23'; 123; 323) zum Emittieren eines ersten optischen Emissionssignalstrahls (B) in Richtung eines Mediums (M; S) auf der ebenen Medienträgerfläche (32), wobei der erste Emitter (23; 23'; 123; 323) so konfiguriert ist, dass er den ersten Emissionsstrahl (B) parallel zu der ebenen Medienträgerfläche (32) emittiert;
- eine Sensoranordnung (25; 125; 325), die sich in einer seitlichen Richtung (W) senkrecht zur Transportrichtung (51) über eine ebene Medienträgerfläche (32) erstreckt und so angeordnet ist, dass sie zumindest einen Teil des von dem Medium (M; S) reflektierten ersten Emissionsstrahls (B) empfängt;
- eine Steuerung (28) mit einem Prozessor (29) zum Erkennen einer Verformung in dem Medium (M; S) und zum Feststellen, dass das Medium (M; S) zum Drucken ungeeignet ist, wenn die Sensordaten von der Sensoranordnung (25; 125; 325) einen vorbestimmten Referenzwert überschreiten; und
- einen Aktuator (24) zum Anpassen und/oder Einstellen einer Höhe des ersten Emitters (23), so dass ein Abstand zwischen der Medienträgerfläche (32) und dem emittierten optischen Strahl (B) ausgewählt und/oder eingestellt wird.

2. Das Drucksystem (1) nach Anspruch 1, wobei die Sensoranordnung (25; 125; 325) über der Medienträgerfläche (32) in einem Abstand von dieser angeordnet ist.

3. Das Drucksystem (1) nach einem der vorhergehenden Patentansprüche, wobei die Sensoranordnung (25; 125; 325) eine seitenbreite Sensoranordnung ist, die sich von einer seitlichen Seite der Medienträgerfläche (32) zu einer gegenüberliegenden seitlichen Seite der Medienträgerfläche (32) erstreckt.

4. Das Drucksystem (1) nach einem der vorhergehenden Patentansprüche, wobei:
- die Sensoranordnung (25; 125; 325) erstreckt sich seitlich über die Medienträgerfläche (32) in einem Abstand von dieser.

5. Das Drucksystem (1) nach einem der vorhergehenden Patentansprüche, wobei die Sensoranordnung (25; 125; 325) in Bezug auf den ersten Emitter (23; 23'; 123; 323) so positioniert ist, dass:
der erste Emissionsstrahl (B) daran gehindert wird, die Sensoranordnung (25; 125; 325) zu erreichen, wenn das Medium (M; S) zum Drucken geeignet ist; und zumindest ein Teil des ersten Emissionsstrahls (B) von dem Medium (M; S) zu der Sensoranordnung (25; 125; 325) reflektiert wird, wenn eine Verformung (D) in dem Medium (M; S) eine vordefinierte Höhe überschreitet.

6. Das Drucksystem (1) nach einem der vorhergehenden Patentansprüche, wobei die Sensoranordnung (25; 125; 325) außerhalb der Trajektorie des ersten Emissionsstrahls (B) positioniert ist, wenn kein Medium (M; S) in der Vorrichtung zur Fehlererkennung (20; 120; 320) vorhanden ist.

7. Das Drucksystem (1) nach einem der vorhergehenden Patentansprüche, wobei die Steuerung (28) ist ferner so konfiguriert, dass sie den weiteren Verlauf des Mediums (M; S) entlang eines Restes eines Transportweges (P) stromabwärts der Medienträgerfläche (32) in Abhängigkeit von der ermittelten Eignung des Mediums zum Drucken steuert;
eine Entfernungsvorrichtung (26) zum Entfernen des Mediums (M; S) aus dem Transportweg (P) des Drucksystems (1), wobei die Steuerung so konfiguriert ist, dass sie die Entfernungsvorrichtung (26) so steuert, dass sie das Medium (M; S) aus dem Transportweg (P) entfernt, wenn der Prozessor feststellt, dass das Medium (M; S) zum Drucken ungeeignet ist.

8. Das Drucksystem (1) nach einem der vorhergehenden Patentansprüche, wobei:
der erste Emitter (23; 23'; 123; 323) während des Gebrauchs entlang der Mediumträgerfläche (32) positioniert und so angeordnet ist, dass er einen ersten Emissionsstrahl (B) in einer vordefinierten Emissionshöhe über eine Ebene des Transportwegabschnitts (P) emittiert.

9. Das Drucksystem (1) nach einem der vorhergehenden Patentansprüche, wobei die Steuerung (28) so angeordnet ist, dass sie die Emissionshöhe in Übereinstimmung mit einem für einen Druckauftrag ausgewählten Medientyp oder einer ausgewählten Dicke auswählt.

10. Das Drucksystem (1) nach einem der vorhergehenden Patentansprüche, wobei:
die Sensoranordnung (23; 23'; 123; 323) eine Vielzahl von Sensorvorrichtungen umfasst, die eine seitlich seitenbreite Sensoranordnung bilden; und
der Prozessor (29) so eingerichtet ist, dass er mindestens ein Erkennungssignal empfängt, das von mindestens einer der mehreren Sensorvorrichtungen erzeugt wird, die sich an einer seitlichen Position über dem Transportwegabschnitt (P) befinden.

11. eine Vorrichtung (20; 120; 320) zur Fehlererkennung, umfassend:
eine Vorrichtung (20; 120; 320) zur Fehlererkennung in einem Drucksystem (1),
umfassend:
- einen Transportmechanismus zum Transportieren eines Mediums (S; M) in einer Transportrichtung (51), der ein Endlosband umfasst, das eine ebene Medienträgerfläche (32) definiert, die sich zwischen einem Paar von drehbaren Trägerrollen (33A, 33B) erstreckt;
- einen ersten Emitter (23; 23'; 123; 323) zum Emittieren eines ersten optischen Emissionssignalstrahls (B) in Richtung eines Mediums (M; S) auf der ebenen Medienträgerfläche (32), wobei der erste Emitter (23; 23'; 123; 323) zum Emittieren des ersten Emissionsstrahls (B) parallel zur ebenen Medienträgerfläche (32) konfiguriert ist;
- eine Sensoranordnung (25; 125; 325), die sich in einer seitlichen Richtung (W) senkrecht zur Transportrichtung (51) über eine ebene Medienträgerfläche (32) erstreckt und so angeordnet ist, dass sie zumindest einen Teil des von dem Medium (M; S) reflektierten ersten Emissionsstrahls (B) empfängt;
- eine Steuerung (28) mit einem Prozessor (29) zum Erkennen einer Verformung in dem Medium (M; S) und zum Feststellen, dass das Medium (M; S) zum Drucken ungeeignet ist, wenn die Sensordaten von der Sensoranordnung (25; 125; 325) einen vorbestimmten Referenzwert überschreiten; und
- einen Aktuator (24) zum Einstellen und/oder Festlegen einer Höhe des ersten Emitters (23), so dass ein Abstand zwischen der Mediumauflagefläche (32) und dem emittierten optischen Strahl (B) ausgewählt und/oder festgelegt wird.

12. Verfahren zum Erkennen von Fehlern in einem Medium in einem Drucksystem (1), das die folgenden Schritte umfasst:
- Auswählen einer Höhe für einen ersten Emitter auf der Grundlage einer Dicke eines ebenen Mediums (M; S) und/oder seines Medientyps und Einstellen des Emitters auf diese Höhe in Bezug auf eine Medienträgerfläche (32);
- Transportieren eines Mediums (M; S) über die ebene Medienträgerfläche (32) in einer Transportrichtung (51);
- der erste Emitter (23; 23'; 123; 323) einen Emissionsstrahl (B) in Richtung des Mediums (M; S) auf der ebenen Medienträgerfläche (32) in dem Drucksystem (1) parallel zur Medienträgerfläche (32) emittiert;
- Bestimmung der Eignung des Mediums (M; S) für den Druck durch:
• Erfassen mindestens eines Teils des vom Medium (M; S) reflektierten Emissionsstrahls (B) und Vergleichen der Sensordaten mit einer Referenz und Feststellen, dass das Medium zum Drucken ungeeignet ist, wenn die Sensordaten die Referenz überschreiten.

13. Das Verfahren nach Patentanspruch 12, das ferner die folgenden Schritte umfasst:
- Analysieren des erfassten mindestens einen Teils des Emissionsstrahls (B), um Verformungen im Medium (M; S) zu identifizieren; und
- Entfernen des Mediums (M; S) aus dem Transportweg (P), wenn eine identifizierte Verformung (D) das Medium (M; S) für den Druck ungeeignet macht.

## Revendications

1. Système d'impression (1) comprenant un appareil (20 ; 120 ; 320) pour la détection des défauts dans un système d'impression (1), comprenant :
- un mécanisme de transport pour transporter un support (S ; M) dans une direction de transport (51) comprenant une bande sans fin définissant une surface de support de support planaire (32) s'étendant entre une paire de rouleaux de support rotatifs (33A, 33B) ;
- un premier émetteur (23 ; 23' ; 123 ; 323) pour émettre un premier faisceau de signal d'émission optique (B) vers un milieu (M ; S) sur la surface de support de milieu planaire (32), dans lequel le premier émetteur (23 ; 23' ; 123 ; 323) est configuré pour émettre le premier faisceau d'émission (B) parallèlement à la surface de support de milieu planaire (32) ;
- un ensemble de capteurs (25 ; 125 ; 325) s'étendant dans une direction latérale (W) perpendiculaire à la direction de transport (51) sur une surface de support de support plane (32) et conçu pour recevoir au moins une partie du premier faisceau d'émission (B) réfléchi par le support (M ; S) ;
- un contrôleur (28) avec un processeur (29) pour identifier une déformation dans le support (M ; S) et déterminer que le support (M ; S) est impropre à l'impression lorsque les données du capteur provenant de l'ensemble de capteurs (25 ; 125 ; 325) dépassent une référence prédéterminée ; et
- un actionneur (24) pour ajuster et/ou régler la hauteur du premier émetteur (23), de sorte qu'une distance entre la surface de support du support (32) et le faisceau optique émis (B) soit sélectionnée et/ou réglée.

2. Système d'impression (1) selon la revendication 1, dans lequel l'ensemble de capteurs (25 ; 125 ; 325) est positionné au-dessus de la surface de support du support (32) à une certaine distance de celle-ci.

3. Le système d'impression (1) selon l'une quelconque des revendications précédentes, dans lequel l'ensemble de capteurs (25 ; 125 ; 325) est un réseau de capteurs à l'échelle de la page s'étendant d'un côté latéral de la surface de support du support (32) à un côté latéral opposé de la surface de support du support (32).

4. Système d'impression (1) selon l'une quelconque des revendications précédentes, , dans lequel :
- l'ensemble de capteurs (25 ; 125 ; 325) s'étend latéralement sur la surface de support du support (32) à une certaine distance de celle-ci.

5. Système d'impression (1) selon l'une quelconque des revendications précédentes, dans lequel l'ensemble capteur (25 ; 125 ; 325) est positionné par rapport au premier émetteur (23 ; 23' ; 123 ; 323) de telle sorte que :
le premier faisceau d'émission (B) ne peut pas atteindre l'ensemble de capteurs (25 ; 125 ; 325) lorsque le support (M ; S) se prête à l'impression ; et
au moins une partie du premier faisceau d'émission (B) est réfléchie par le milieu (M ; S) vers l'ensemble de capteurs (25 ; 125 ; 325) lorsqu'une déformation (D) du milieu (M ; S) dépasse une hauteur prédéfinie.

6. Système d'impression (1) selon l'une quelconque des revendications précédentes, dans lequel l'ensemble de capteurs (25 ; 125 ; 325) est positionné à l'extérieur de la trajectoire du premier faisceau d'émission (B), lorsqu'aucun support (M ; S) n'est présent dans l'appareil de détection de défauts (20 ; 120 ; 320).

7. Système d'impression (1) selon l'une quelconque des revendications précédentes, dans lequel
le contrôleur (28) est en outre configuré pour contrôler la progression du support (M ; S) le long d'une partie restante du chemin de transport (P) en aval de la surface de support du support (32) en fonction de l'aptitude du support déterminé à l'impression ;
un dispositif de retrait (26) pour retirer le support (M ; S) du chemin de transport (P) du système d'impression (1), dans lequel le contrôleur est configuré pour commander le dispositif de retrait (26) afin de retirer le support (M ; S) du chemin de transport (P) si le processeur détermine que le support (M ; S) n'est pas adapté à l'impression.

8. Système d'impression (1) selon l'une quelconque des revendications précédentes, dans lequel :
Pendant l'utilisation, le premier émetteur (23 ; 23' ; 123 ; 323) est positionné le long de la surface de support du milieu (32) et disposé de manière à émettre un premier faisceau d'émission (B) à une hauteur d'émission prédéfinie sur un plan de la section du chemin de transport (P).

9. Système d'impression (1) selon l'une quelconque des revendications précédentes, dans lequel le contrôleur (28) est agencé pour sélectionner la hauteur d'émission en correspondance avec un type ou une épaisseur de support sélectionné pour un travail d'impression.

10. Système d'impression (1) selon l'une quelconque des revendications précédentes, dans lequel:
l'ensemble de capteurs (23 ; 23' ; 123 ; 323) comprend une pluralité de dispositifs de capteurs formant un réseau de capteurs latéral à l'échelle de la page ; et
le processeur (29) est conçu pour recevoir au moins un signal de détection généré par au moins un des dispositifs de détection positionnés latéralement sur la section du chemin de transport (P).

11. un appareil (20 ; 120 ; 320) pour la détection des défauts, comprenant :
un appareil (20 ; 120 ; 320) pour la détection des défauts dans un système d'impression (1), comprenant :
- un mécanisme de transport pour transporter un milieu (S ; M) dans une direction de transport (51) comprenant une bande sans fin définissant une surface de support de milieu plane (32) s'étendant entre une paire de rouleaux de support rotatifs (33A, 33B) ;
- un premier émetteur (23 ; 23' ; 123 ; 323) pour émettre un premier faisceau de signal d'émission optique (B) vers un milieu (M ; S) sur la surface de support de milieu planaire (32), dans lequel le premier émetteur (23 ; 23' ; 123 ; 323) est configuré pour émettre le premier faisceau d'émission (B) parallèlement à la surface de support de milieu planaire (32) ;
- un ensemble de capteurs (25 ; 125 ; 325) s'étendant dans une direction latérale (W) perpendiculaire à la direction de transport (51) sur une surface de support de support plane (32) et conçu pour recevoir au moins une partie du premier faisceau d'émission (B) réfléchi par le support (M ; S) ;
- un contrôleur (28) avec un processeur (29) pour identifier une déformation dans le support (M ; S) et déterminer que le support (M ; S) est impropre à l'impression lorsque les données des capteurs (25 ; 125 ; 325) dépassent une référence prédéterminée ; et
- un actionneur (24) pour ajuster et/ou régler la hauteur du premier émetteur (23), de sorte qu'une distance entre la surface de support du support (32) et le faisceau optique émis (B) soit sélectionnée et/ou réglée.

12. Procédé de détection des défauts d'un support dans un système d'impression (1), comprenant les étapes suivantes :
- sélection d'une hauteur pour un premier émetteur en fonction de l'épaisseur d'un support plan (M ; S) et/ou de son type de support et réglage de l'émetteur à cette hauteur par rapport à une surface de support (32) ;
- transport d'un support (M ; S) sur la surface de support plan (32) dans une direction de transport (51) ;
- le premier émetteur (23 ; 23' ; 123 ; 323) émet un faisceau d'émission (B) vers le support (M ; S) sur la surface plane de support (32) dans le système d'impression (1) parallèlement à la surface de support (32) ;
- la détermination de l'aptitude du support (M ; S) à l'impression par :
• détecter au moins une partie du faisceau d'émission (B) réfléchi par le support (M ; S) et comparer les données du capteur à une référence et déterminer que le support ne convient pas à l'impression lorsque les données du capteur dépassent la référence.

13. Procédé selon la revendication 12, comprenant en outre les étapes suivantes :
- analyser la partie détectée du faisceau d'émission (B) pour identifier les déformations du milieu (M ; S) ; et
- retirer le support (M ; S) du chemin de transport (P) lorsqu'une déformation identifiée (D) rend le support (M ; S) impropre à l'impression.
